# EUROPEAN PATENT SPECIFICATION

(11) **EP 2 108 865 B1**
(45) Date of publication and mention of the grant of the patent: **19.01.2011**
(21) Application number: 09009177.8
(22) Date of filing: 04.07.2005
(51) Int. Cl.: F16H 61/662, F16H 63/06, F16H 55/56

(54) **Power unit and straddle-type vehicle provided with the power unit**
Antrieb und Grätschsitz-Fahrzeug, das mit dem Antrieb versehen ist
Unité d'alimentation et véhicule de type à enfourcher avec l'unité d'alimentation

(30) Priority: 08.07.2004 JP 2004202371
(43) Date of publication of application: 14.10.2009
(62) Divisional of application: 05765234.9
(73) Proprietor: Yamaha Hatsudoki Kabushiki Kaisha, Shizuoka-ken Shizuoka 438-8501 (JP)
(72) Inventor: Sugitani, Tsuyoshi, Iwata-shi Shizuoka-ken 438-8501 (JP); Takebe, Mitsukazu, Iwata-shi Shizuoka-ken 438-8501 (JP); Fujii, Isao, Iwata-shi Shizuoka-ken 438-8501 (JP); Hayashi, Junji, Iwata-shi Shizuoka-ken 438-8501 (JP); Aoyama, Atsushi, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 558 752
- EP-A- 0 755 819
- EP-A- 1 420 195
- DE-A1- 19 946 193

## Description

The present invention relates to a unit swing type power unit for small vehicles having an engine and a V-belt type continuously variable transmission. Such a power unit can be taken from prior art document EP 0 558 752 A. Said prior art power unit comprises a V-belt continuously variable transmission accommodated within a transmission casing and a crankcase of the engine is attached to said transmission casing. Said V-belt type continuously variable transmission is controlled by an electric motor provided for changing groove widths of the primary sheave. Said primary sheave is attached to the crankshaft of the engine. Moreover, said power unit comprises a starter motor for cranking said engine in order to start same. The entire power unit is supported by a rotational support member, so that said power unit is attached to a frame body of the related vehicle. The control motor for the V-belt type continuously variable transmission is arranged behind a support axis for the primary sheave, while the starter motor is arranged in front of said support axis, so that the motors and said support axis are arranged in a substantially common horizontal plan. The rotational support member for supporting the power unit on a frame means is arranged directly under said support axis of the primary sheave, while the engine extends in a basically upright position, so that the engine, the support axis of the primary sheave and the rotational support member are arranged substantially in a common vertical plan. Said arrangement provides a equal placement of the respective elements around the support shaft of the primary sheave.

For example, scooter type motorcycles generally mount thereon a unit swing type power unit, in which an engine body and a transmission casing with a continuously variable transmission accommodated therein are joined integrally.

For example, Patent Document 1 proposes, as a power unit of this kind, one, in which a sheave drive member, which drives a primary sheave to vary a belt wound diameter, and a starting drive member, which rotationally drives a crankshaft to start an engine, are arranged on one side of a crank chamber and a common electric motor drives the sheave drive member and the starting drive member.
Patent Document 1: Patent No. 3043061

### Disclosure of the Invention

### Problems that the Invention is to Solve

By the way, the conventional power unit adopts a construction, in which both the sheave drive member and the starting drive member are arranged together on one side of the crank chamber. Therefore, the primary sheave and the secondary sheave project outside to cause a problem that a whole vehicle is correspondingly increased in vehicle width dimension and left and right weight unbalance is liable to occur.

It is an object of the present invention, to provide a power unit for a small vehicle that ensures suitable balancing of the power unit when attaching same to a vehicle.
According to the present invention, said objective is solved by a power unit for a small vehicle having the features of independent claim 1. Preferred embodiments are laid down in the dependent claims.

[Fig. 1] Fig. 1 is a side view showing a scooter type motorcycle, on which a power unit for small-sized vehicles, according to a first embodiment of the invention, is mounted.
[Fig. 2] Fig. 2 is a side view showing a power unit connected to a vehicle body frame of the motorcycle shown in Fig. 1 to be able to swing.
[Fig. 3] Fig. 3 is a view (plan view) as viewed along an arrow A in Fig. 2.
[Fig. 4] Fig. 4 is an enlarged view showing the power unit shown in Fig. 2.
[Fig. 5] Fig. 5 is a side view showing an arrangement of respective sheaves of a V-belt type continuously variable transmission mounted on the power unit shown in Fig. 4.
[Fig. 6] Fig. 6 is a cross sectional view taken along the line B-B in Fig. 5.
[Fig. 7] Fig. 7 is a cross sectional view taken along the line C-C in Fig. 5.
[Fig. 8] Fig. 8 is an enlarged view showing a periphery of an electric motor shown in Fig. 3.

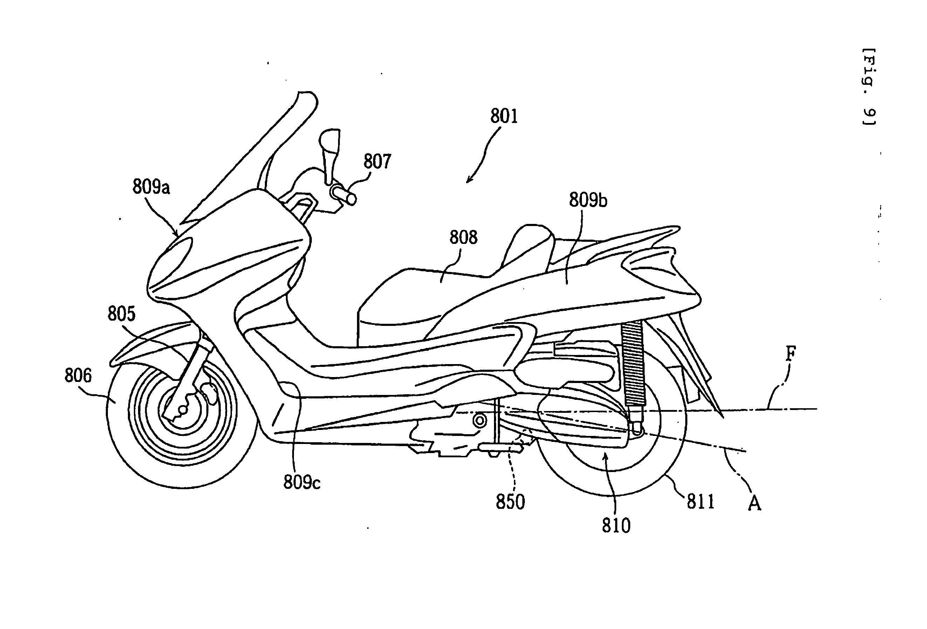

[Fig. 9] Fig. 9 is a side view showing a scooter type motorcycle provided with a power unit according to a second embodiment of the invention.

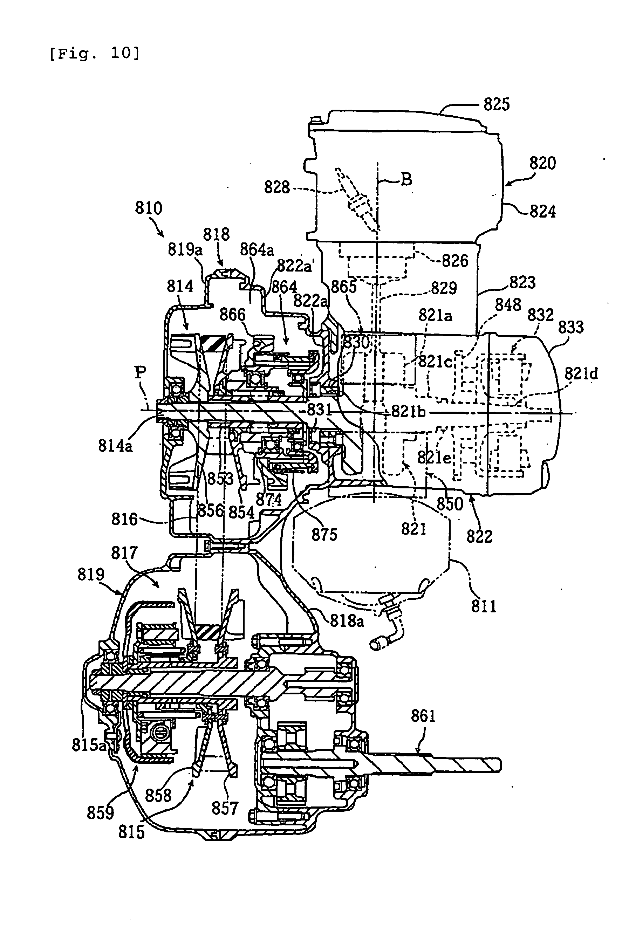

[Fig. 10] Fig. 10 is a plan view showing, in partial section, the power unit.

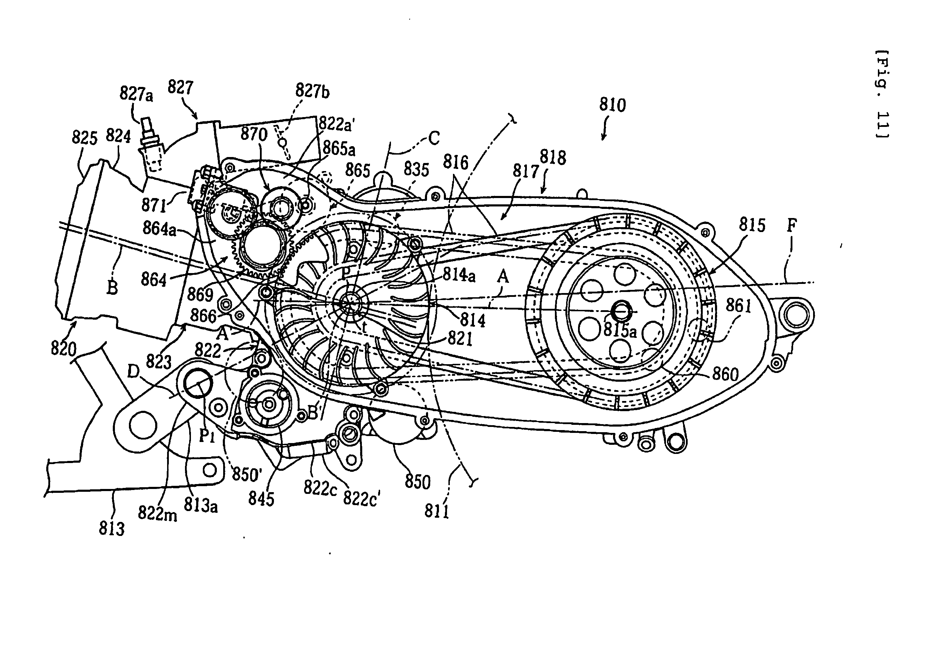

[Fig. 11] Fig. 11 is a side view showing a state, in which a case cover of the power unit is removed.

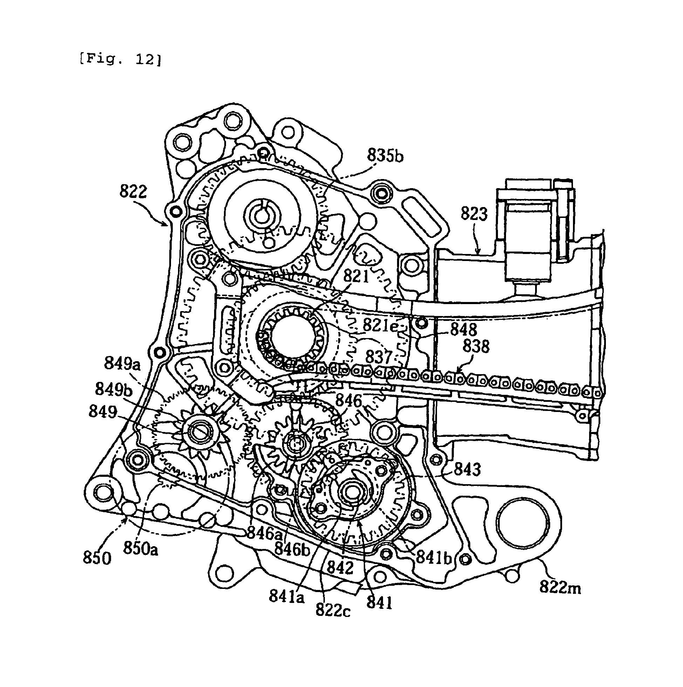

[Fig. 12] Fig. 12 is a right side view showing an engine body of the power unit.

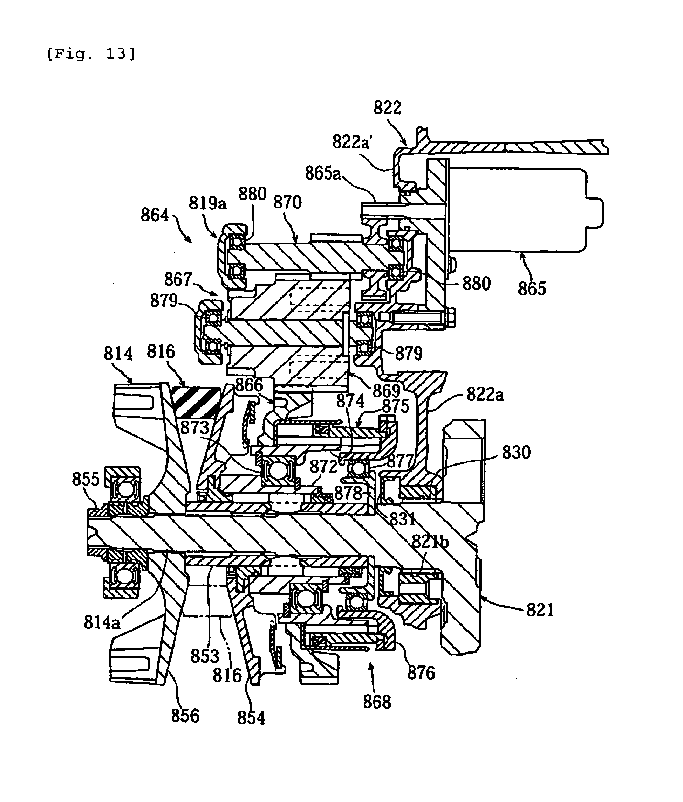

[Fig. 13] Fig. 13 is a cross sectional view showing a continuously variable transmission mechanism of the power unit.

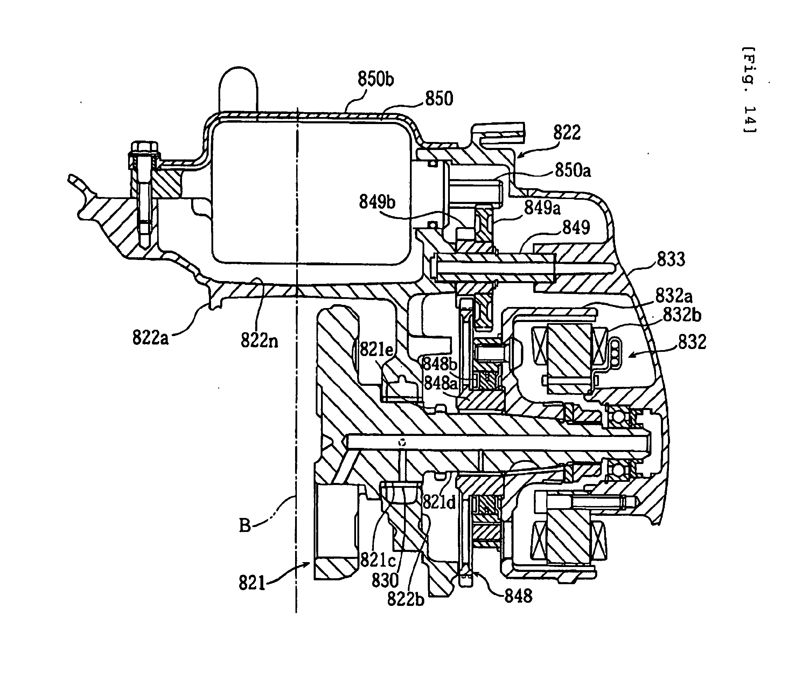

[Fig. 14] Fig. 14 is a cross sectional view showing a starter motor part of the power unit.

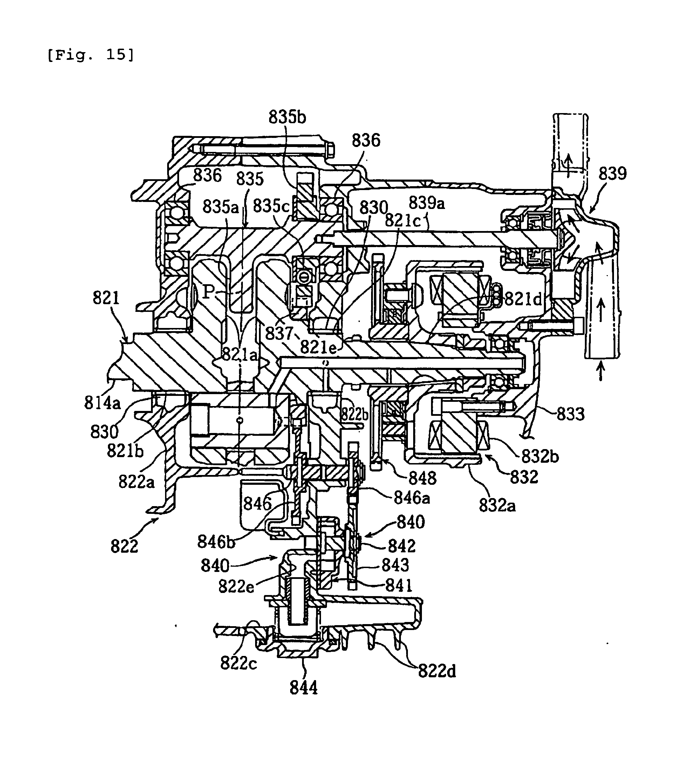

[Fig. 15] Fig. 15 is a cross sectional view showing a primary balancer and an oil pump drive part of the power unit.

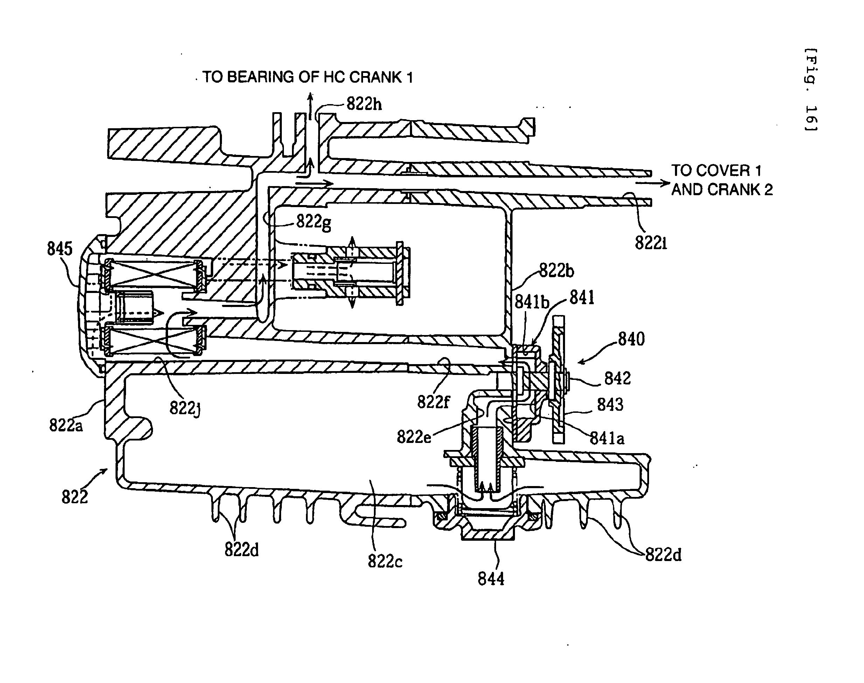

[Fig. 16] Fig. 16 is a cross sectional view showing an oil reservoir of the power unit.

### Description of Reference Numerals and Signs

1: primary shaft (drive side shaft)
2: secondary shaft (driven side shaft)
3: primary sheave (drive side sheave)
4: secondary sheave (driven side sheave)
5: belt
10: electric motor (ECVT motor)
100: transmission casing
101: transmission casing
106: crankcase
110: V-belt type continuously variable transmission
401: motorcycle
410: power unit
450: pivot shaft
460: vehicle body frame
601: starter motor
611: balancer shaft

A power unit for small-sized vehicles, according to a embodiment of the invention, will be described in detail below with reference to the drawings.

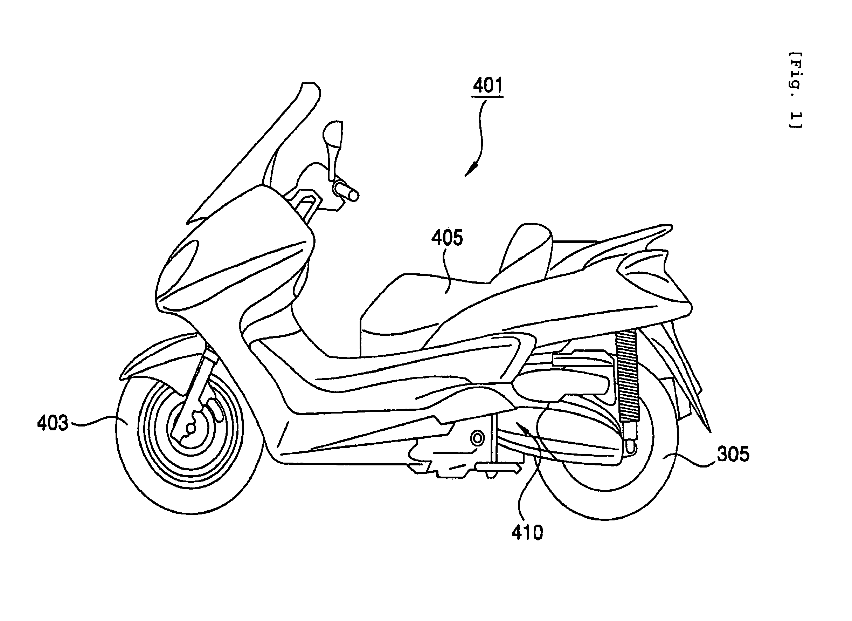

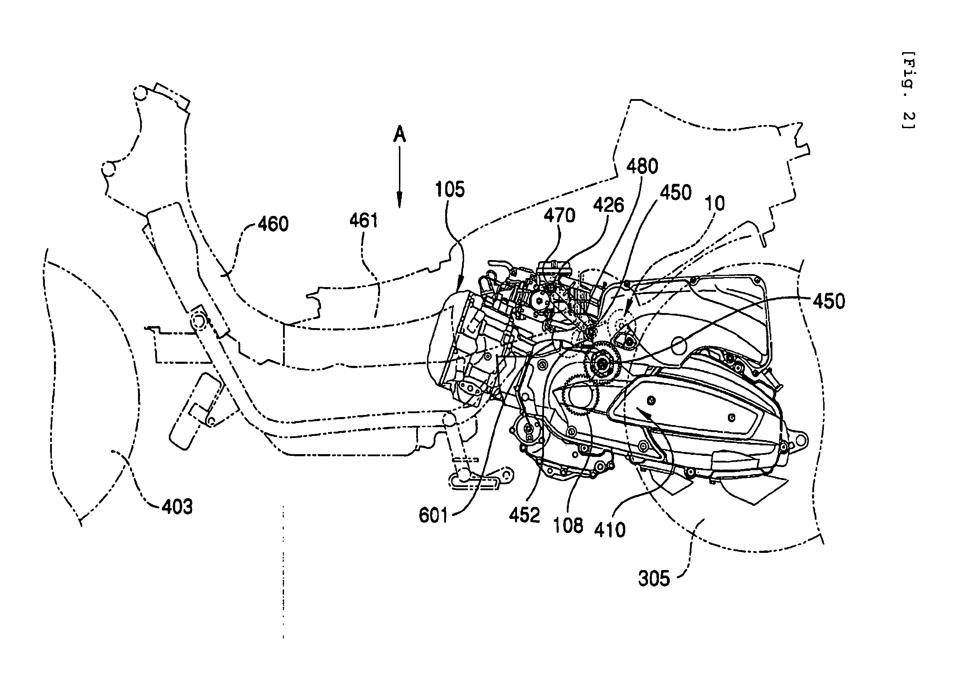

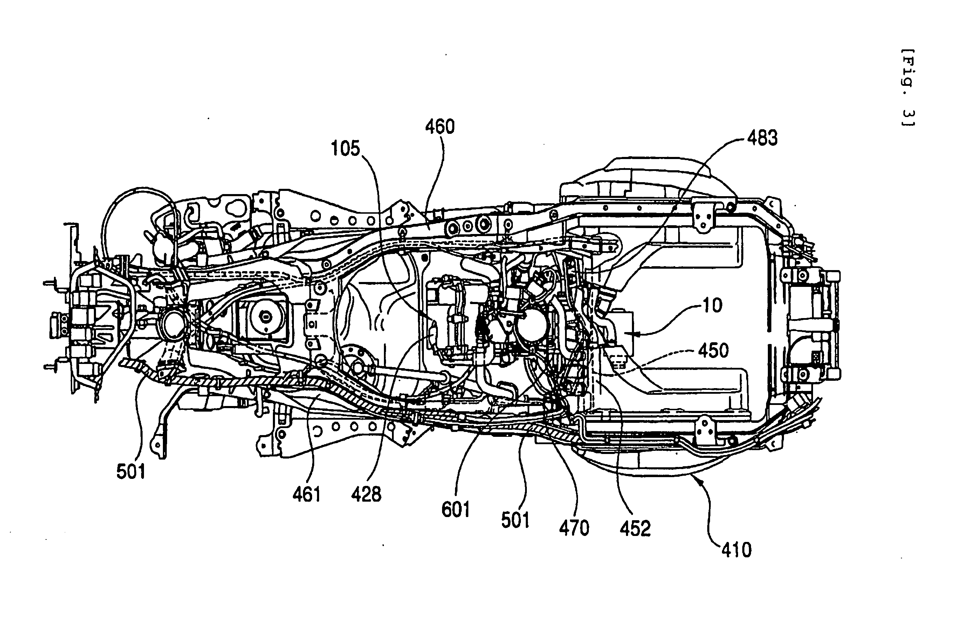

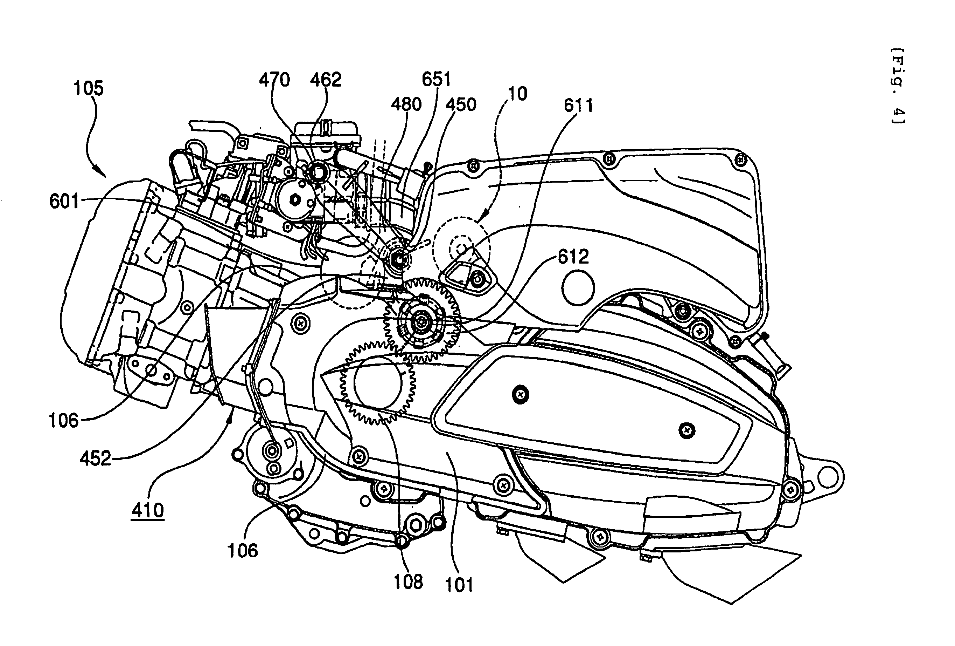

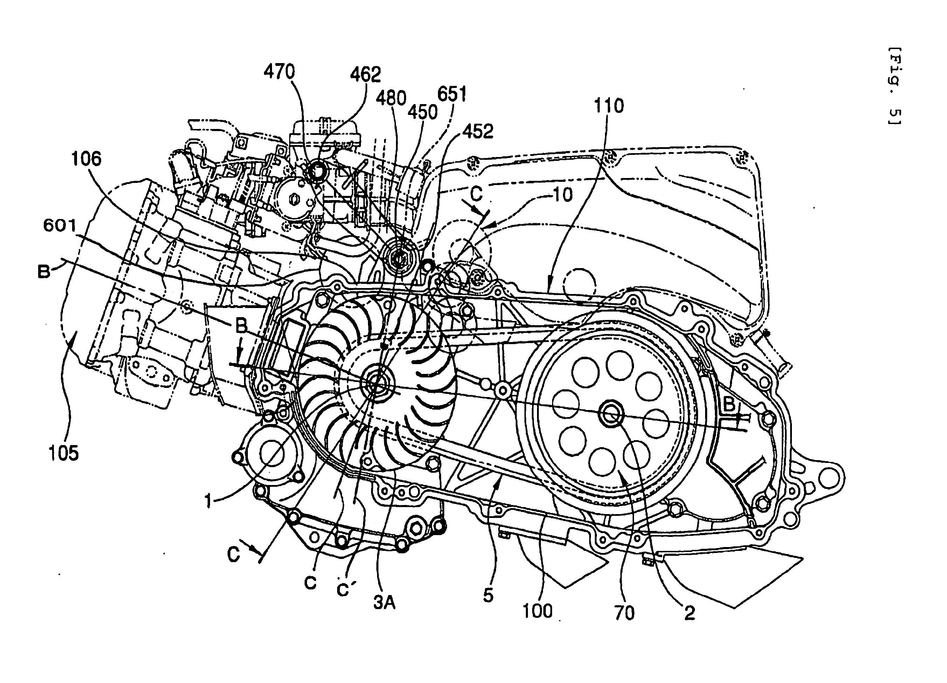

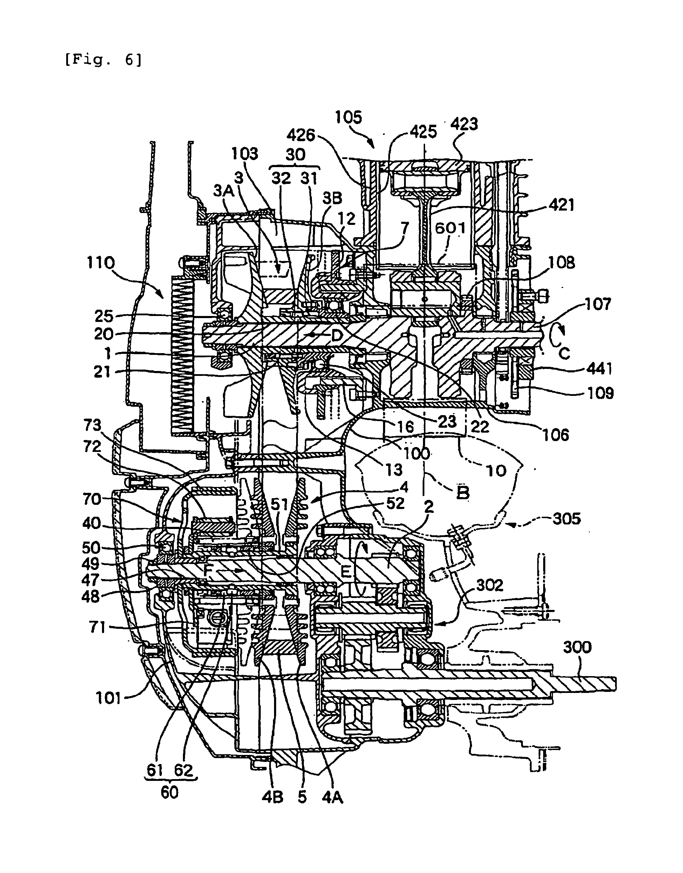

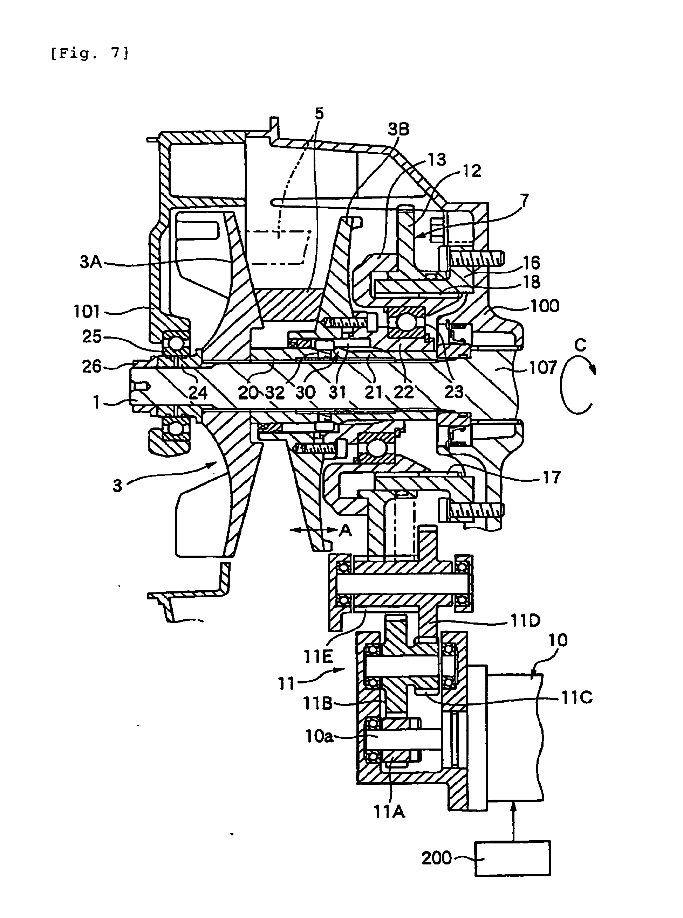

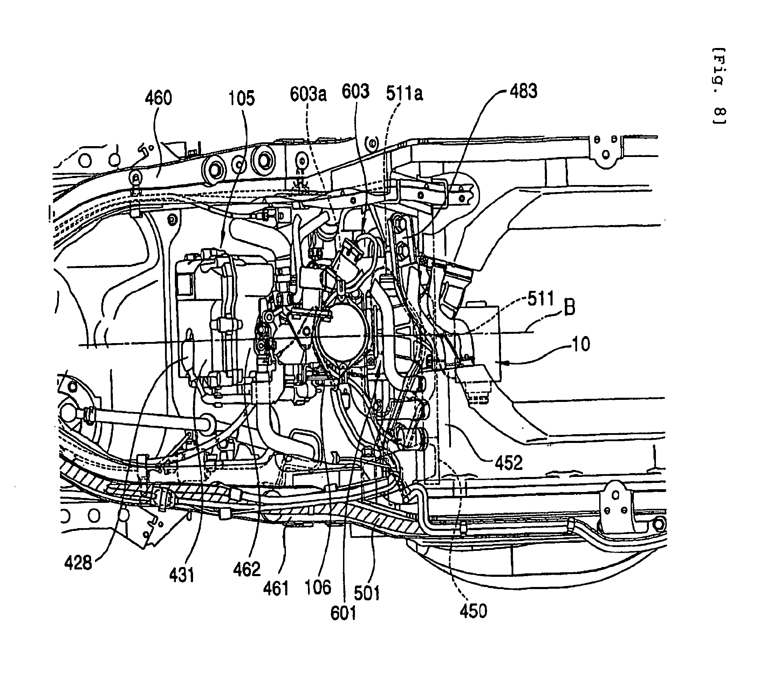

Fig. 1 is a side view showing an embodiment of a scooter type motorcycle, on which a power unit for small-sized vehicles, according to the invention, is mounted, Fig. 2 is a side view showing a power unit connected to a vehicle body frame of the motorcycle shown in Fig. 1 to be able to swing, Fig. 3 is a view (plan view) as viewed along an arrow A in Fig. 2, Fig. 4 is an enlarged view showing the power unit shown in Fig. 2, Fig. 5 is a side view showing an arrangement of respective sheaves of a V-belt type continuously variable transmission mounted on the power unit shown in Fig. 4, Fig. 6 is a cross sectional view taken along the line B-B in Fig. 5, Fig. 7 is a cross sectional view taken along the line C-C in Fig. 5, and Fig. 8 is an enlarged view showing a periphery of an electric motor shown in Fig. 3.

In a motorcycle 401 shown in Fig. 1, a power unit 410 is arranged in a position below a seat 405 between a front wheel 403 and a rear wheel 305, which is a drive wheel. Major halves of a front and both sides of a vehicle are covered by a cowl.

The power unit 410 shown herein comprises, as shown in Figs. 4 to 6, an engine 105, transmission casings 100, 101 extending rearward from a crankcase 106 of the engine 105, and a V-belt type continuously variable transmission 110 accommodated in a space (accommodating part) defined by the transmission casings 100, 101 and the crankcase 106 to change output of the engine 105 in speed, and transmits output of the continuously variable transmission 110 to an axle shaft 300 of the rear wheel 305, which is arranged rearwardly of the engine 105 to make a drive wheel, through an automatic centrifugal clutch 70 and a speed reducer 302, which comprises a gear train.
The engine 105 comprises the crankcase 106 being a casing to support a crankshaft 107 rotatably, a piston 423 connected to the crankshaft 107 through a connecting rod 421, a cylinder block 426 joined to an upper portion of the crankcase 106 to provide cylinder parts (combustion chamber) 425, on which the piston 423 slides, and a cylinder head 431 joined to an upper portion of the cylinder block 426 with intake and exhaust ports and an ignition plug 428 mounted to respective cylinder parts 425.

With the engine 105 in the embodiment, the crankshaft 107 is mounted with an axis thereof directed in a vehicle width direction.

A fly wheel 441 is mounted to a right end of the crankshaft 107 and a generator is mounted to the fly wheel 441. The generator produces electricity upon rotation of the crankshaft 107 to supply electricity to electric parts mounted on a vehicle and to charge a vehicle-mounted battery with electricity.

A primary shaft 1, which makes an input shaft of the V-belt type continuously variable transmission 110 according to the invention, is formed integral with a left end of the crankshaft 107. The transmission casings 100, 101 are mounted to a left side of the crankcase 106 to define an accommodating part 103 being a space, which accommodates the V-belt type continuously variable transmission 110.

As shown in Figs. 2 and 4, the crankcase 106, to which the transmission casings 100, 101 are mounted, is provided on an upper, outer peripheral surface thereof with a turning support 452, through which a pivot shaft 450 extends in the vehicle width direction.

Also, a suspension support 462, through which a pivot shaft 470 extends in the vehicle width direction, is provided on a vehicle body frame 460 of the motorcycle 401.

The pivot shaft 450 and the pivot shaft 470 are connected to each other by a link 480. Accordingly, the power unit 410 according to the embodiment is connected to the vehicle body frame 460 through the link 480 and born by the vehicle body frame 460 to be able to swing about the pivot shaft 450 as a center of rotation.

The V-belt type continuously variable transmission 110 comprises the primary shaft (drive side shaft) 1 formed integral with the crankshaft 107, which is an output shaft of the engine 105 being a power source, a secondary shaft (driven side shaft) 2 arranged in parallel to the primary shaft 1 to take out therefrom output to the drive wheel 305, a primary sheave 3 and a secondary sheave 4, respectively, arranged on the primary shaft 1 and the secondary shaft 2 to comprise stationary flanges 3A, 4A and moving flanges 3B, 4B, which define therebetween V-grooves to train a belt therearound, and to move the moving flanges 3B, 4B in an axial direction (a left and right direction in Fig. 6) to vary the V-grooves in groove width, a V-belt 5 trained around the V-grooves of the primary sheave 3 and the secondary sheave 4 to transmit a rotational motive power between the both sheaves 3, 4, and a groove width regulating mechanism 7, which uses an electric motor (ECVT motor) 10 to move the moving flanges 3B, 4B through a reciprocating gear (drive member) 12 described later to regulate the groove widths of the primary sheave 3 and the secondary sheave 4, and the groove widths of the primary sheave 3 and the secondary sheave 4 are varied by the groove width regulating mechanism 7 to regulate diameters, at which the V-belt 5 is trained around the respective sheaves 3, 4 to adjust a speed change ratio between the primary sheave 3 and the secondary sheave 4 steplessly.

According to the embodiment, as shown in Fig. 4, the electric motor 10 of the groove width regulating mechanism 7 is arranged rearwardly of the turning support 452 on an outer peripheral surface upper portion of the crankcase 106 to make a connection to the vehicle body frame 460, and a starter motor 601 is arranged forwardly of the turning support 452 to start the engine 105, the electric motor 10 and the starter motor 601 being arranged alternately to be aligned substantially horizontally in the vicinity before and after the turning support 452 and with axes thereof directed in the vehicle width direction.

The starter motor 601 transmits rotation through a gear train (depiction of which is omitted) to a starter driven gear (starting drive member) 109 fixed to the crankshaft 107.

While the electric motor 10 used in the groove width regulating mechanism 7 is required to enable normal rotation and reverse rotation for increase and decrease in groove width, the starter motor 601 is used only in normal rotation. Here, when a single reversible motor serves as use for the groove width regulating mechanism and for starting, the starter motor is used in reverse rotation, so that it is preferable to mount respective exclusive motors in order to ensure reliability of the starter motor in operation.

Here, as shown in Fig. 6, as viewed in a direction perpendicular to an axis of the crankshaft 107 and a cylinder axis B, that is, as viewed in plan view, the starter driven gear 109 and the reciprocating gear 12, respectively, are arranged on the right and on the left with the cylinder axis B therebetween, and the electric motor 10 and the starter motor 601 are arranged on the cylinder axis B. Also, the starter motor 601 and the electric motor 10 are arranged on a front side and on a rear side with the axis of the crankshaft 107 therebetween.

Also, as viewed in a direction along the crankshaft 107, the electric motor 10 and the starter motor 601, respectively, are arranged on the rear side and on the front side with a virtual plane C, which includes the axis of the crankshaft 107 and is perpendicular to the cylinder axis B, therebetween. Furthermore, the electric motor 10 and the starter motor 601, respectively, are arranged on the rear side and on the front side of a virtual plane C', which includes both the crankshaft 107 and the pivot shaft 450.

The electric motor 10 and the starter motor 601 are mounted to an upper, outer peripheral surface of the crankcase 106 so as to make upper ends thereof agree substantially with each other, and an intake duct 651, to which an air cleaner is connected, extends above the electric motor 10 and the starter motor 601.

Further, according to the embodiment, a balancer shaft 611 is arranged in the vicinity of the turning support 452 in the crankcase as shown in Fig. 4.

A gear 612 arranged on the balancer shaft meshes with a gear 108, which is assembled to the crankshaft 107, to be driven upon rotation of the crankshaft 107 to rotate reversely whereby the balancer shaft 611 applies a predetermined rotational load (counter weight) on the crankshaft 107 to cancel oscillation of the crankshaft 107 to stabilize engine rotation and thus is considerable in weight.

A main wire harness 501, which supplies electricity to various vehicle-mounted electric parts, is laid vertically along an upper frame 461 on a left side of the vehicle body frame 460 as shown in Figs. 3 and 8.

As indicated by a thick line shown in Fig. 8, a feed cable 511, which feeds electricity to the electric motor 10, branches from the main wire harness 501 in the vicinity of a position, in which the turning support 452 permitting the pivot shaft 450 to pass therethrough is mounted, and forms a curved portion 511a slacking around a link reinforcement frame 483, which extends in the vehicle width direction to reinforce the link 480, to be then connected to the electric motor 10 arranged just in the rear of the turning support 452.

Also, as shown in Fig. 8, a feed cable 603, which feeds electricity to the starter motor 601, branches from the main wire harness 501 in the vicinity of a position, in which the turning support 452 permitting the pivot shaft 450 to pass therethrough is mounted, and forms a curved portion 603a slacking around the link reinforcement frame 483, which extends in the vehicle width direction to reinforce the link 480, to be then connected to the starter motor 601 arranged just in front of the turning support 452.

Subsequently, referring to Figs. 6 and 7, an explanation will be given to respective constructions and operations of the V-belt type continuously variable transmission 110, the automatic centrifugal clutch 70, and the speed reducer 302, which make constituents of the power unit 410.

The continuously variable transmission 110 according to the embodiment comprises, as the groove width regulating mechanism 7, the electric motor 10 (see Figs. 7 and 8) being means that gives an optional moving thrust to the moving flange 3B of the primary sheave 3, a primary side actuating mechanism (so-called torque cam) 30 provided between the moving flange 3B and the primary shaft 1 to give a moving thrust to the moving flange 3B in a direction, in which a difference in torque is cancelled, when a torque difference in rotational torque is generated between the primary shaft 1 and the moving flange 3B, a compression coil spring 40 being means that gives a thrust to the moving flange 4B of the secondary sheave 4 in a direction, in which a groove width is decreased, and a secondary side actuating mechanism (so-called torque cam) 60 provided between the moving flange 4B and the secondary shaft 2 to give a moving thrust to the moving flange 4B in a direction, in which a difference in torque is cancelled, when a torque difference in rotational torque is generated between the secondary shaft 2 and the moving flange 4B.

In addition, in Fig. 6, arrows C, E indicate directions, in which the primary shaft 1 and the secondary shaft 2 rotate. Also, an arrow D indicates a direction of that thrust, which is generated on the moving flange 3B by the primary side actuating mechanism 30, and an arrow F indicates a direction of that thrust, which is generated on the moving flange 4B by the secondary side actuating mechanism 60.

The continuously variable transmission 110 according to the embodiment is accommodated in the transmission casings 100, 101 adjacent to the crankcase 106 of the engine 105, and the primary shaft 1 is provided integrally on the crankshaft 107 of the engine 105.

The secondary shaft 2 is connected to the axle shaft 300 through the speed reducer 302 and the drive wheel 305 is mounted to the axle shaft 300. The primary sheave 3 is arranged on an outer periphery of the primary shaft 1 and the secondary sheave 4 is mounted to an outer periphery of the secondary shaft 2 with the automatic centrifugal clutch 70 therebetween.

As shown in Fig. 7, the primary sheave 3 comprises the stationary flange 3A fixed to one end of the primary shaft 1 and the moving flange 3B movable in an axial direction (direction of an arrow A in the figure) of the primary shaft 1, and a V-groove, around which the V-belt 5 is trained, is formed between opposite conical surfaces of the stationary flange 3A and the moving flange 3B.

One end of the primary shaft 1 is supported on the casing 101 with a bearing 25 therebetween, and a sleeve 24 with the bearing 25 fitted thereon and a sleeve 21 described later are fixed together by a lock nut 26 whereby a boss of the stationary flange 3A is fixed so as not to move axially.

The moving flange 3B comprises a cylindrical-shaped boss, through which the primary shaft 1 extends, and a cylindrical-shaped slider 22 is fixed to one end of the boss. The sleeve 21 is interposed between the slider 22 and the primary shaft 1, the sleeve 21 being fitted onto an outer periphery of the primary shaft 1 with a spline 20 therebetween to rotate together with the primary shaft 1.

The slider 22 is mounted to an outer periphery of the sleeve 21 to be movable axially.

The slider 22 is formed with a cam groove 31, which extends obliquely in an axial direction, and a guide pin 32 provided protrusively on the outer periphery of the sleeve 21 is inserted slidably into the cam groove 31. Thereby, the moving flange 3B made integral with the slider 22 is movable axially of the primary shaft 1 while rotating with the primary shaft 1.

The cam groove 31 and the guide pin 32 constitute the primary side actuating mechanism 30 described above. Accordingly, inclination of the cam groove 31 is set to be oriented in a direction (for example, in a direction, in which a moving thrust in a direction (direction of the arrow D) for a decrease in groove width of the primary sheave 3 is given to the moving flange 3B when the primary shaft 1 is larger in rotational torque than the moving flange 3B), in which a moving thrust in a direction for cancellation of a difference in torque is given to the moving flange 3B of the primary sheave 3 when a torque difference in rotational torque is generated between the primary shaft 1 and the moving flange 3B. A path of the cam groove 31 including an angle of inclination can be set optionally in the form of a straight line, a curved line, etc. according to a given performance, and working thereof is also easy.

On the other hand, a cylindrical-shaped feed guide 16 projecting toward the moving flange 3B is screwed to an inner side of the casing 100 opposed to the moving flange 3B. The feed guide 16 is provided coaxially on the primary shaft 1 and female threads 17 are formed on an inner peripheral surface of the feed guide 16. Also, the reciprocating gear (drive member) 12 is fitted onto an outer periphery of the feed guide 16 to be slidable axially and circumferentially.

The reciprocating gear 12 is joined to an end of an outer peripheral wall of an annular rotating ring 13 curved in U-shaped cross section from an inner peripheral wall toward the outer peripheral wall, and male threads 18 formed on an outer peripheral surface of the inner peripheral wall are threaded into the female threads 17 of the feed guide 16. Also, the inner peripheral wall of the rotating ring 13 is joined to the slider 22, which is made integral with the moving flange 3B through a bearing 23.

With such construction, when the reciprocating gear 12 rotates, the reciprocating gear 12 and the rotating ring 13 move axially due to the lead action of the female threads 17 and the male threads 18 whereby the moving flange 3B made integral with the slider 22 moves and so the primary sheave 3 is varied in groove width. In addition, trapezoidal threads are used for the male threads 18 and the female threads 17.

The electric motor 10, which optionally moves the moving flange 3B of the primary sheave 3, is arranged in the vicinity of a rear portion of the turning support 452 on the upper, outer peripheral surface of the crankcase 106 as described above, and a motor output shaft 10a and the reciprocating gear 12 are connected to each other through a gear transmission mechanism 11, in which multi-stage spur gears 11A to 11E are combined.

The moving flange 3B can be moved axially through the reciprocating gear 12 by controlling rotation of the electric motor 10 with a control unit 200 (see Fig. 7).

Also, the secondary sheave 4 comprises, as shown in Fig. 6, the stationary flange 4A connected to the secondary shaft 2 with the centrifugal clutch 70 therebetween, and the moving flange 4B movable axially (direction of the arrow B in the figure) of the secondary shaft 2, and a V-groove, around which the V-belt 5 is trained, is formed between opposite conical surfaces of the stationary flange 4A and the moving flange 4B.

The stationary flange 4A comprises a cylindrical-shaped guide 51, the guide 51 being supported rotatably on the outer periphery of the secondary shaft 2 with a bearing therebetween. The centrifugal clutch 70 interposed between the stationary flange 4A and the secondary shaft 2 comprises a centrifugal plate 71, which rotates together with the guide 51 of the stationary flange 4A, a centrifugal weight 72 supported on the centrifugal plate 71, and a clutch housing 73, with which the centrifugal weight 72 contacts to come close thereto and away therefrom.

Here, the centrifugal plate 71 is spline-fittingly joined to the guide 51 of the stationary flange 4A to be able to rotate together therewith. Also, the clutch housing 73 is fixed through a boss member 47 spline-fitted onto an end of the secondary shaft 2. In addition, the end of the secondary shaft 2 is supported on the casing 101 with a bearing 50 therebetween, and a sleeve 48, onto which the bearing 50 is fitted, is fixed by a lock screw 49 whereby the clutch housing 73 and the boss member 47 are fixed so as not to move axially.

With such construction, when the rotational frequency of the centrifugal plate 71, which rotate together with the stationary flange 4A, reaches a predetermined value, the centrifugal weight 72 is moved outward due to a centrifugal force to come into contact with the clutch housing 73, so that rotation of the stationary flange 4A is transmitted to the secondary shaft 2.

The moving flange 4B is made integral with a cylindrical-shaped slider 52, which is supported on an outer periphery of the guide 51 of the stationary flange 4A to be movable axially, and biased by the compression coil spring 40 in a direction, in which the V-groove is decreased in groove width. The compression coil spring 40 is mounted in a compressed state with one end thereof abutting against a projection on an outer periphery of the slider 52 and the other end thereof abutting against a spring receiver of the centrifugal plate 71.

A cam groove 61 inclined relative to an axis is formed on the slider 52 made integral with the moving flange 4B, and a guide pin 62 provided protrusively on the outer periphery of the guide 51, which is made integral with the stationary flange 4A, is inserted slidably into the cam groove 61. Thereby, the moving flange 4B made integral with the slider 52 is made movable axially of the secondary shaft 2 while rotating with the secondary shaft 2.

The cam groove 61 and the guide pin 62 constitute the secondary side actuating mechanism 60 described above. Accordingly, inclination of the cam groove 61 is set to be oriented in a direction (for example, in a direction, in which a moving thrust in a direction (an arrow F) for a decrease in groove width of the secondary sheave 4 is given to the moving flange 4B when the secondary shaft 2 is smaller in rotational torque than the moving flange 4B), in which a moving thrust in a direction for cancellation of a difference in torque is given to the moving flange 4B when a torque difference in rotational torque is generated between the secondary shaft 2 and the moving flange 4B. A path of the cam groove 61 including an angle of inclination can be set optionally in the form of a straight line, a curved line, etc. according to a given performance and working thereof is also easy.

Owing to the provision of the secondary side actuating mechanism 60, the stationary flange 4A joined to the secondary shaft 2 becomes slow in rotational frequency as when, for example, a motorcycle comes to an upward hill and a difference in speed is generated between it and the moving flange 4B keeping rotation by the V-belt 5, the guide pin 62 apparently pushes the cam groove 61 in a direction of the arrow F, so that the moving flange 4B is pushed through the slider 52 in a direction toward the stationary flange 4A and the V-groove is forcedly decreased in groove width.

Subsequently, an explanation will be given to an operation of the V-belt type continuously variable transmission 110 of a motorcycle according to the embodiment.

When the control unit 200 inputs a speed change signal into the electric motor 10, the reciprocating gear 12 and the rotating ring 13 are rotated upon rotation of the electric motor 10 and the slider 22 fixed to the rotating ring 13 through the bearing 23 moves axially due to the lead action of the male threads 18 and the female threads 17, so that the moving flange 3B made integral with the slider 22 moves and so the primary sheave 3 is varied in groove width.

For example, in the case where the primary sheave 3 is decreased in groove width, a diameter, at which the V-belt 5 is trained, is increased and a speed change ratio shifts toward Top. Also, in the case where the primary sheave 3 is increased in groove width, a diameter, at which the V-belt 5 is trained, is decreased and a speed change ratio shifts toward Low.

On the other hand, the secondary sheave 4 is changed in groove width in opposition to the primary sheave 3 as the primary sheave 3 is changed in groove width.

That is, when a diameter, at which the V-belt 5 is trained around the primary sheave 3, is decreased (shifts toward Low), a force, with which the V-belt 5 bites, is decreased on a side of the secondary sheave 4, so that slip is generated between the moving flange 4B and the V-belt and a difference in speed is generated between the moving flange 4B and the stationary flange 4A. Then, the moving flange 4B is pushed toward the stationary flange 4A due to the action of the cam groove 61 and the bias of the compression coil spring 40, so that the secondary sheave 4 is decreased in groove width and a diameter, at which the V-belt 5 is trained, is increased.

Consequently, a speed change ratio between the primary sheave 3 and the secondary sheave 4 is increased and torque transmitted to the drive wheel 305 is increased. Conversely, when a diameter, at which the V-belt 5 is trained around the primary sheave 3, is increased (shifts toward Top), the V-belt 5 bites into the V-groove on a side of the secondary sheave 4, so that the moving flange 4B moves against the bias of the compression coil spring 40 in a direction away from the stationary flange 4A. Therefore, the secondary sheave 4 is increased in groove width and a diameter, at which the V-belt 5 is trained, is increased, so that a speed change ratio between the primary sheave 3 and the secondary sheave 4 is decreased.

When the rotational frequency of the secondary sheave 4 reaches a predetermined value, the secondary sheave 4 is joined to the secondary shaft 2 with the centrifugal clutch 70 therebetween and rotation of the secondary shaft 2 is transmitted to the axle shaft 300 through a gear train of the speed reducer 302.

Since the V-belt type continuously variable transmission 110 combined with the engine 105 is constructed such that the electric motor 10 regulates the respective sheaves 3, 4 in groove width, the power unit 410 for small-sized vehicles, described above, controls the operation of the electric motor 10 according to an operation condition and a running state of a vehicle to enable exercising speed change ratio control according to an operation condition and a running state of a vehicle.

Also, the electric motor 10 of the groove width regulating mechanism 7 is arranged on the upper, outer peripheral surface of the crankcase 106 of the engine 105 and heat generated in the power unit 410 is not directly radiated, so that temperature rise is hard to generate due to the influence of heat generated in the power unit 410.

Besides, the electric motor 10 is arranged rearwardly of the turning support 452 on the upper, outer peripheral surface of the crankcase 106 as shown in Fig. 2 and rotation of the drive wheel 305 arranged rearwardly thereof takes in a surrounding wind to generate the action of blasting around the electric motor 10, so that a cooling effect due to blasting can be expected and a heat-resisting performance required of the electric motor 10 of the groove width regulating mechanism 7 is suppressed to enable achieving reduction in cost.

Also, since the electric motor 10 of the groove width regulating mechanism 7 is arranged on the upper, outer peripheral surface of the crankcase 106 and can be readily put in an exposed state only by opening a vehicle body cover, sheet, etc. which cover, for example, an upper portion of the power unit 410, as compared with a conventional power unit, in which an electric motor is arranged in a casing of a power unit, inspection and maintenance of the electric motor 10 can be readily performed to provide for an excellent quality of maintenance.

Also, since the electric motor 10 of the groove width regulating mechanism 7 is arranged on the upper, outer peripheral surface of the crankcase 106, there is no need of consideration or the like to avoid interference with moving parts such as a gear train for power transmission when electric wiring is laid for the electric motor 10, so that laying arrangement of electric wiring for the electric motor 10 is facilitated.

Also, since the electric motor 10 of the groove width regulating mechanism 7 and the starter motor 601 of the engine 105, which are large in weight, are aligned before and after and in the vicinity of the turning support 452 as a turning point, balance in weight can be achieved by gathering heavy item in the vicinity of the turning point. Accordingly, the electric motor 10 of the V-belt type continuously variable transmission 110 does not make a factor to cause unbalance of a vehicle in weight, so that it is possible to improve a vehicle in balance of weight, thus enabling improving the operability.

Also, since the electric motor 10 of the groove width regulating mechanism 7 and the starter motor 601 of the engine 105, respectively, are arranged in the vicinity of the turning support 452 as a turning point, relative movements and vibrating widths of the respective motors 10, 601 relative to the turning point can be restricted to small extents for the swinging motion of the power unit 410 about the pivot shaft during the running of a vehicle.

Accordingly, it is possible to restrict inertial forces of the respective motors when the power unit 410 swings, and it is possible to correspondingly lessen stress loading acting around the turning point. Corresponding to an amount, by which stress loading acting is lessened when the power unit 410 swings, it becomes possible to restrict the mechanical strength ensured for a connection of the power unit 410 and the vehicle body frame 460 and for the casing (mainly, the crankcase 106) of the power unit 410 to achieve lightening of the power unit 410 and the vehicle 401.

Also, since the electric motor 10 of the groove width regulating mechanism 7 and the starter motor 601, respectively, are arranged in the vicinity of the turning support 452 as a turning point, slacking of electric wiring for the respective motors 10, 601 is suppressed to enable neatly gathering electric wiring for the respective motors 10, 601, thus enabling making the wire harness 501 small in size and simple and improving the respective motors 10, 601 in anti-vibrating quality.

Further, according to the embodiment, the balancer shaft 611 being a heavy part arranged in the crankcase 106 is arranged in the vicinity of the turning support 452 whereby heavy parts arranged around the turning point are increased and gathered around the turning point, so that it becomes further ready to regulate balance of a vehicle in weight and lessening of inertial forces generated by heavy parts when the power unit 410 swings is promoted, thus enabling further lightening of a vehicle or the like.

Also, in that configuration, in which the electric motor 10 of the groove width regulating mechanism 7 is arranged on the upper, outer peripheral surface of the crankcase 106, the electric motor 10 does not obstruct shortening of a center distance between the primary shaft 1 and the secondary shaft 2 and is suited to making the V-belt type continuously variable transmission 110 compact in the case where there is generated a need of decreasing a center distance between the primary shaft 1 and the secondary shaft 2 for the purpose of making the V-belt type continuously variable transmission 110 compact.

Also, according to the embodiment, with that construction, in which the electric motor 10 and the starter motor 601 are arranged before and after and in the vicinity of the turning support 452 and the intake duct 651 is extended thereabove, the electric motor 10 and the starter motor 601 are made uniform in height, so that the intake duct 651 can be configured to pass substantially straight and an intake system of high performance with less line resistance or the like becomes easy to construct.

In addition, according to the embodiment, the electric motor 10 for the groove width regulating mechanism 7 is arranged rearward in the vicinity of the turning support 452 and the starter motor 601 is arranged forward in the vicinity of the turning support 452 but in terms of weight balance or the like the same function and effect can be produced also when the electric motor 10 is arranged forward in the vicinity of the turning support 452 and the starter motor 601 is arranged rearward in the vicinity thereof.

Also, while the embodiment has been described with respect to the power unit 410 for motorcycles, the power unit 410 according to the invention is not limited to motorcycles but can be of course applied to tricycles, four-wheel buggies, etc., which are relatively small-sized vehicles.

Furthermore, while the embodiment has been described taking an example of the power unit of a scooter type motorcycle, the power unit of the invention is not limited to a scooter type one but can be applied to other motorcycles. Also, "motorcycle" in the specification of the present application means a motorcycle, includes a motorcycle and a scooter, and specifically means a vehicle capable of turning with a vehicle body inclined. Accordingly, even one, in which at least one of a front wheel and a rear wheel comprises two or more wheels and which is a tricycle, a four-wheel car (or more) in terms of the number of tires, can be included in "motorcycle" in the specification of the present application. Furthermore, the invention is not limited to a motorcycle but can be applied to other vehicles, which can make use of the effect of the invention, and can be applied to so-called straddle-type vehicles, which include four-wheel buggies (All Terrain Vehicle) and snowmobiles except motorcycles.

## Claims

1. A power unit for a small vehicle, comprising:
an engine (105);
a transmission casing (100, 101) extending from a crank case (106) of the engine (105) to the rear of the vehicle;
a V-belt type continuously variable transmission (110) accommodated within a space formed by the transmission casing (100, 101) and the crank case (106) to transmit output from the engine (105) to a driving wheel positioned behind the engine (105); and
a rotational support member (452) provided on an outer peripheral surface of the crank case (106) and connected to a vehicle frame via a pivot shaft (450) penetrating through the rotational support member (452) in a vehicle width direction such that the rotational support member (452) can pivot, wherein the V-belt type continuously variable transmission (110) includes a primary sheave (3) which is provided on a primary shaft (1) for receiving output from the engine (105) and has a fixed flange (3A) and a movable flange (3B) between which a V-shaped groove for receiving a belt is formed, a secondary sheave (4) which is provided on a secondary shaft (2) disposed in parallel with the primary shaft (1) and extracting the output to the driving wheel and has a fixed flange (4A) and a movable flange (4B) between which a V-shaped groove for receiving a belt is formed, a V-belt (5) attached to the V-shaped grooves of the primary sheave (3) and secondary sheave (4) such that the V-belt (5) is wound around the primary and secondary sheaves (3, 4) to transmit rotational power therebetween, and a groove width controlling mechanism (7) for controlling groove widths of the primary sheave (3) and secondary sheave (4) by applying arbitrary shifting thrust to the movable flange (3B) of the primary sheave (3) using an electric motor (10);
and **characterized in that**
the electric motor (10) of the groove width controlling mechanism (7) and a starter motor (601) for starting the engine (105) are disposed to an upper portion of the outer peripheral surface of the crank case (106) in the vicinity of the rotational support member (452) provided on said upper portion of the outer peripheral surface of the crank case (106) with the rotational support member (452) interposed between the electric motor (10) and the starter motor (601) in a front-to-rear direction of the vehicle.

2. A power unit for a small vehicle according to claim 1, wherein a balancer shaft (611) for eliminating vibration of the engine (105) is provided in the vicinity of the rotational support member (452) within the crank case (106).

3. A power unit for a small vehicle according to claim 1 or 2, wherein the electric motor (10) of the groove width controlling mechanism (7) is disposed behind the rotational support member (452) provided on said upper portion of the outer peripheral surface of the crank case (106).

## Patentansprüche

1. Leistungseinheit für ein kleines Fahrzeug, aufweisend:
eine Brennkraftmaschine (105);
ein Getriebegehäuse (100, 101), das sich von einem Kurbelgehäuse (106) der Brennkraftmaschine (105) nach hinten des Fahrzeuges erstreckt;
ein stufenlos veränderbares Getriebe (110) vom Keilriemen- Typ, untergebracht innerhalb eines Raumes, gebildet durch das Getriebegehäuse (100, 101) und das Kurbelgehäuse (106), um eine Ausgangsleistung von der Brennkraftmaschine (105) auf ein Antriebsrad, positioniert hinter der Brennkraftmaschine (105), zu übertragen; und
ein Drehlagerteil (452), vorgesehen auf einer äußeren Umfangsoberfläche des Kurbelgehäuses (106) und mit dem Fahrzeugrahmen über eine Schwenkwelle (450) verbunden, die durch das Drehlagerteil (452) in einer Richtung der Fahrzeugbreite derart hindurchdringt, dass das Drehlagerteil (452) schwenken kann,
wobei das stufenlos veränderbare Getriebe (110) vom Keilriemen- Typ eine Primärscheibe (3) enthält, die auf einer Primärwelle (1) zum Aufnehmen der Ausgangsleistung von der Brennkraftmaschine (105) vorgesehen ist und einen feststehenden Flansch (3A) und einen bewegbaren Flansch (3B) hat, zwischen denen eine V- Nut zum Aufnehmen eines Keilriemens gebildet ist, eine Sekundärscheibe (4), die auf der Sekundärwelle (2) vorgesehen und parallel mit der Primärwelle (1) angeordnet ist und die die Ausgangsleistung zu dem Antriebsrad herauszieht und einen feststehenden Flansch (4A) und einen bewegbaren Flansch (4B) hat, zwischen denen eine V- Nut zum Aufnehmen eines Riemens gebildet ist,
einen Keilriemen (5), derart mit den V- Nuten der Primärscheibe (3) und der Sekundärscheibe (4) verbunden, dass der Keilriemen (5) rund um die Primär- und
Sekundär- Scheibe (3, 4) geschlungen ist, um eine Drehleistung dazwischen zu übertragen, und eine Nutbreiten- Steuerungsvorrichtung (7) zum Steuern der Nutbreiten der Primärscheibe (3) und der Sekundärscheibe (4) durch Aufbringen eines beliebigen Schaltdruckes auf den bewegbaren Flansch (3B) der Primärscheibe (3) unter Verwendung eines elektrischen Motors (10);
und **dadurch gekennzeichnet, dass**
der elektrische Motor (10) der Nutbreiten- Steuerungsvorrichtung (7) und ein Startermotor (601) zum Starten der Brennkraftmaschine (105) angeordnet sind an einem oberen Abschnitt der äußeren Umfangsoberfläche des Kurbelgehäuses (106) in der Nähe des Drehlagerteils (452) angeordnet sind, vorgesehen an dem oberen Abschnitt der äußeren Umfangsoberfläche des Kurbelgehäuses (106),
wobei das Drehlagerteil (452) zwischen den elektrischen Motor (10) und den Startermotor (601) in einer Vorwärts- Rückwärts- Richtung des Fahrzeuges eingesetzt ist.

2. Leistungseinheit für ein kleines Fahrzeug nach Anspruch 1, wobei eine Ausgleichswelle (611) zum Eliminieren einer Schwingung der Brennkraftmaschine (105) in der Nähe des Drehlagerteils (452) innerhalb des Kurbelgehäuses (106) vorgesehen ist.

3. Leistungseinheit für ein kleines Fahrzeug nach Anspruch 1 oder 2, wobei der elektrische Motor (10) der Nutbreiten- Steuerungsvorrichtung (7) hinter dem Drehlagerteil (452), vorgesehen an dem oberen Abschnitt der äußeren Umfangsoberfläche des Kurbelgehäuses (106), vorgesehen ist.

## Revendications

1. Groupe moteur pour un petit véhicule, comportant :
un moteur (105) ;
un carter de boîte de vitesses (100, 101) se prolongeant à partir d'un carter de moteur (106) du moteur (105) vers l'arrière du véhicule ;
une transmission à variation continue à courroie trapézoïdale (110), placée dans un espace formé par le carter de boîte de vitesses (100, 101) et le carter de moteur (106) pour transmettre la sortie du moteur (105) à une roue motrice positionnée derrière le moteur (105) ; et
un élément rotatif de support (452), placé sur une surface périphérique extérieure du carter de moteur (106), et relié à un châssis de véhicule via un axe de pivot (450) pénétrant au travers de l'élément rotatif de support (452), selon une direction latérale du véhicule, de sorte que l'élément rotatif de support (452) puisse pivoter, dans lequel la transmission à variation continue à courroie trapézoïdale (110) comporte une poulie primaire (3), placée sur un arbre primaire (1), pour recevoir la sortie du moteur (105),
et possède une joue fixe (3A) et une joue mobile (3B) entre lesquelles est formée une gorge trapézoïdale destinée à recevoir une courroie, une poulie secondaire (4), placée sur un arbre secondaire (2) disposé parallèlement à l'arbre primaire (1) et extrayant la sortie pour l'appliquer à la roue motrice et possède une joue fixe (4A) et une joue mobile (4B) entre lesquelles est formée une gorge trapézoïdale pour recevoir une courroie, une courroie trapézoïdale (5) reliée aux gorges trapézoïdales de la poulie primaire (3) et de la poulie secondaire (4) de sorte que la courroie trapézoïdale (5) s'enroule autour des poulies primaire et secondaire (3, 4) pour transmettre l'énergie de rotation entre elles, et un mécanisme de commande de largeur de gorge (7) destiné à commander les largeurs de gorge de la poulie primaire (3) et
d'une poulie secondaire (4) en appliquant une poussée de déplacement arbitraire à la joue mobile (3B) de la poulie primaire (3) en utilisant un moteur électrique (10) ; et **caractérisé en ce que**
le moteur électrique (10) du mécanisme de commande de largeur de gorge (7) et un moteur de démarreur (601),
destiné à démarrer le moteur (105), sont disposés au niveau d'une partie supérieure de la surface périphérique extérieure du carter de moteur (106), au voisinage de l'élément de support rotatif (452) placé sur ladite partie supérieure de la surface périphérique extérieure du carter de moteur (106), l'élément de support rotatif (452) étant interposé entre le moteur électrique (10) et le moteur de démarreur (601) selon une orientation avant-arrière du véhicule.

2. Groupe moteur pour un petit véhicule, selon la revendication 1, dans lequel un arbre d'équilibrage (611) destiné à éliminer les vibrations du moteur (105) est placé au voisinage de l'élément rotatif de support (452) dans le carter de moteur (106).

3. Groupe moteur pour un petit véhicule selon la revendication 1 ou 2, dans lequel le moteur électrique (10) du mécanisme de commande de largeur de gorge (7) est disposé derrière l'élément rotatif de support (452) placé sur ladite partie supérieure de la surface périphérique extérieure du carter de moteur (106).
